Europäisches Patentamt

(19) European Patent Office    (11) Numéro de publication: **0 176 119**

Office européen des brevets    **B1**

(12)    **FASCICULE DE BREVET EUROPÉEN**

(45) Date de publication du fascicule du brevet:    (51) Int. Cl.⁴: **C 09 K 5/06**
08.06.88

(21) Numéro de dépôt: **85201312.7**

(22) Date de dépôt: **15.08.85**

(54) Compositions à base de chlorure de calcium hexahydraté pour le stockage de calories par changement de phase et procédé pour sa préparation.

(30) Priorité: **27.08.84 FR 8413329**

(43) Date de publication de la demande:
**02.04.86 Bulletin 86/14**

(45) Mention de la délivrance du brevet:
**08.06.88 Bulletin 88/23**

(84) Etats contractants désignés:
**AT BE CH DE FR GB IT LI NL SE**

(56) Documents cité:
**DE-A-3 201 314**
**US-A-3 719 225**
**US-A-4 412 931**

(73) Titulaire: **SOLVAY & Cie (Société Anonyme), Rue du Prince Albert, 33, B-1050 Bruxelles (BE)**

(72) Inventeur: **Faille d'Huysse, Gaétan, Avenue des Palombes, 9, B-1150 Bruxelles (BE)**
Inventeur: **Boxus, Louis, Avenue des Hortensias, 48, B-1940 Sint- Stevens- Woluwe (BE)**

## Description

La présente invention concerne une composition à base de chlorure de calcium hexahydraté pour le stockage de calories par changement de phase dont la plage d'efficacité se situe en dessous de 23°C et qui convient, dès lors, particulièrement pour la récupération d'énergie thermique dans les habitations et dans les installations de cultures couvertes telles que des serres ainsi que le procédé pour la préparation d'une telle composition.

Compte tenu notamment de son prix avantageux et de son pouvoir élevé de stockage de calories par changement de phase, le chlorure de calcium hexahydraté a déjà été souvent proposé comme constituant de base pour des compositions de stockage de calories. Toutefois, étant donné que le point de fusion du chlorure de calcium hexahydraté se situe aux environs de 29°C, les compositions proposées jusqu'à présent ne se révèlent pas idéales pour le conditionnement thermique des habitations et des installations de cultures couvertes dans lesquelles on souhaite généralement maintenir une température de 17 à 23°C et, de préférence, de 19 à 22°C.

Afin d'abaisser le point de fusion des compositions de stockage de calories à base de chlorure de calcium hexahydraté, il a déjà été proposé par K.K. MEISSINGSET et F. GRONDVOLD lors des conférences tenues à Birmingham les 9 et 10 septembre 1982 en rapport avec le stockage de l'énergie solaire d'incorporer dans ces compositions du chlorure de potassium et/ou du chlorure d'ammonium. Toutefois, selon les essais relatés par ces chercheurs, il apparaît que ces additifs ne permettent pas d'abaisser le point de fusion des compositions en deçà de 23°C et donc de les rendre parfaitement efficaces pour une exploitation dans les habitations et dans les serres de cultures.

Il est possible d'abaisser le point de fusion d'une composition en y ajoutant un léger excès d'eau. Cette méthode présente cependant l'inconvénient de diminuer la capacité de stockage thermique et d'élargir considérablement l'intervalle de température séparant le début de la fin de fusion. Cet élargissement de la plage de fusion diminue encore la capacité utile de stockage puisque les variations de température tolérées, dans le cas des serres agricoles notamment, ne sont que de quelques degrés.

La présente invention concerne dès lors à titre principal une composition à base de chlorure de calcium hexahydraté pour le stockage de calories par changement de phase dont la plage d'efficacité se situe en dessous de 23°C et notamment entre 17 et 22°C et présentant une plage fusion aussi étroite que possible.

L'invention concerne dès lors une composition à base de chlorure de calcium hexahydraté pour le stockage de calories par changement de phase qui se caractérise en ce qu'elle contient, par rapport au poids de chlorure de calcium anhydre, de 2 à 15 % en poids d'un composé nitré de potassium et de 2 à 15 % en poids de chlorure d'ammonium.

Le chlorure de calcium hexahydraté utilisé dans la composition conforme à l'invention peut être de provenance quelconque. On préfère toutefois utiliser du chlorure de calcium hexahydraté préparé à partir de chlorure de calcium industriel et notamment à partir de chlorure de calcium obtenu comme sous-produit dans le procédé SOLVAY de production de carbonate de sodium. Il semble, en effet, que ce chlorure de calcium industriel contienne certaines impuretés qui peuvent notamment exercer une action favorable sur le phénomène de surfusion.

Le composé nitré de potassium peut être soit du nitrite de potassium soit du nitrate de potassium, ce dernier étant préféré. Le composé nitré de même que le chlorure d'ammonium peuvent également être de qualité industrielle.

De préférence, le rapport pondéral entre les quantités de composé nitré de potassium et de chlorure d'ammonium incorporées dans les compositions selon l'invention varie entre 0,4 et 2.

Dans la composition conforme à l'invention, on peut avantageusement incorporer, en outre, des agents de nucléation connus ayant pour fonction de réduire ou de supprimer tout phénomène indésirable de surfusion et/ou des agents épaississants ayant pour effet d'inhiber tout phénomène de fusion non congruente.

A titre d'agents de nucléation, on peut citer entre autres l'hydroxyde de calcium et les carbonates, chlorures et fluorures de baryum et de strontium éventuellement hydratés. Des agents épaississants efficaces sont constitués par des dérivés cellulosiques, du silicagel et en particulier par des diatomites ayant un indice de vide supérieur à 5 comme décrites dans la demande de brevet FR-A-2457-230 déposée au nom de l'ANVAR.

Dans la composition conforme à l'invention, le constituant principal assurant l'absorption, le stockage et la restitution de calories par changement de phase est le chlorure de calcium cristallisant sous la forme hexahydratée. Toutefois, pour des facilités de stockage et de transport, ainsi qu'il est exposé dans la demande de brevet 82.03100, déposée le 23 février 1982 au nom de la demanderesse, il est loisible de produire la composition selon l'invention en incorporant le chlorure de calcium sous forme anhydre, mono- et/ou dihydratée et, dans ce cas, d'incorporer ultérieurement l'eau nécessaire pour permettre la cristallisation du chlorure de calcium sous la forme hexahydratée sur le site d'exploitation lors de l'utilisation effective de la composition.

L'invention concerne également un procédé pour réaliser une composition à base de chlorure de calcium hexahydraté pour le stockage de calories par changement de phase qui consiste à incorporer dans cette composition, par rapport au poids de chlorure de calcium anhydre, de 2 à 15 % en poids d'un composé nitré du potassium et de 2 à 15 % en poids de chlorure d'ammonium.

Selon un premier mode de réalisation de la composition selon l'invention, on réalise, dans un premier stade, une solution aqueuse de chlorure de calcium dans laquelle la quantité d'eau présente correspond à la quantité nécessaire à la cristallisation du chlorure de calcium sous la forme hexahydratée, cette solution étant maintenue à une température au moins égale à 30°C pour éviter la cristallisation du chlorure de calcium sous la forme hexahydratée. Puis, dans un second stade, on incorpore dans cette solution les quantités désirées de composé nitré de potassium et de chlorure d'ammonium et éventuellement les autres additifs souhaités tels que des agents de nucléation et/ou des agents épaississants tout en soumettant le milieu à un brassage continu, la température étant maintenue au moins à 30°C afin d'éviter une prise en masse par cristallisation du chlorure de calcium sous forme hexahydratée.

Le mélange pâteux peut alors être emballé dans des conditionnements étanches appropriés et être stocké ou expédié sur son lieu d'utilisation.

Selon un second mode de réalisation de la composition selon l'invention, on introduit dans ce mélangeur du chlorure de calcium anhydre, mono- et/ou dihydraté et les quantités désirées de composé nitré de potassium, de chlorure d'ammonium et éventuellement les autres additifs; les divers constituants étant sous la forme de particules ayant un diamètre moyen inférieur à 0,5 mm, le mélange homogène ainsi obtenu étant ensuite emballé dans des conditionnements étanches en vue de son expédition sur le site d'exploitation. Dans ce dernier cas, la composition selon l'invention est réalisée sur le site d'exploitation en incorporant dans le mélange la quantité d'eau nécessaire pour permettre la cristallisation de la totalité du chlorure de calcium sous la forme hexahydratée. Lorsque le chlorure de calcium utilisé est, selon le mode préféré, du chlorure de calcium industriel, il se présente sous forme de paillettes qu'il suffit de broyer pour obtenir des particules de diamètre moyen convenable ou encore sous la forme de poussières produites dans l'installation de fabrication de paillettes, les particules de poussières ayant déjà dans ce cas les dimensions requises.

La composition conforme à l'invention est en outre illustrée par l'exemple pratique de réalisation donné ci-après.

**Exemple**

Dans un mélangeur à pales maintenu à 35°C, on introduit 457 g de chlorure de calcium anhydre puis progressivement 449 g d'eau en vue de former une solution de chlorure de calcium. Dans cette solution maintenue à 35°C, on incorpore ensuite 43 g de nitrate de potassium et 51 g de chlorure d'ammonium.

On prélève un échantillon de la solution ainsi obtenue que l'on refroidit à -40°C en vue de provoquer sa prise en masse par cristallisation du chlorure de calcium sous forme hexahydratée. On détermine ensuite la température de fusion de l'échantillon en utilisant un calorimètre différentiel dans lequel l'échantillon est réchauffé à une vitesse de 0,1°C par minute. On constate que la température de fusion de l'échantillon s'élève à 20,4°C et que 80 % de la chaleur de fusion est absorbée entre 17 et 21,5°C.

**Revendications**

1. Composition à base de chlorure de calcium hexahydraté pour le stockage de calories par changement de phase caractérisée en ce qu'elle contient, par rapport au poids de chlorure de calcium anhydre, de 2 à 15 % en poids d'un composé nitré de potassium et de 2 à 15 % en poids de chlorure d'ammonium.

2. Composition selon la revendication 1 caractérisée en ce que le composé nitré de potassium est du nitrate de potassium.

3. Composition selon la revendication 1 ou 2 caractérisée en ce que le rapport pondéral entre les quantités de composé nitré de potassium et de chlorure d'ammonium incorporées dans la composition est compris entre 0,4 et 2.

4. Composition selon l'une quelconque des revendications 1 à 3 caractérisée en ce qu'elle contient en outre un agent de nucléation et/ou un agent épaississant.

5. Procédé pour réaliser une composition à base de chlorure de calcium hexahydraté pour le stockage de calories par changement de phase caractérisée en ce qu'on incorpore dans cette composition, par rapport au poids du chlorure de calcium anhydre, de 2 à 15 % en poids d'un composé nitré de potassium et de 2 à 15 % de chlorure d'ammonium.

6. Procédé selon la revendication 5 caractérisé en ce qu'on réalise une solution aqueuse de chlorure de calcium dans laquelle la quantité d'eau présente correspond à la quantité nécessaire à la cristallisation du chlorure de calcium sous la forme hexahydratée, en ce qu'on maintient la solution à au moins 30°C, en ce qu'on y incorpore les quantités désirées de composé nitré de potassium et de chlorure d'ammonium tout en soumettant le milieu à un brassage continu et en ce qu'on emballe le mélange pâteux ainsi obtenu dans des conditionnements étanches.

7. Procédé selon la revendication 5 caractérisé en ce qu'on introduit dans un mélangeur du chlorure de calcium anhydre, mono-et/ou dihydraté et les quantités désirées de composé nitré de potassium et de chlorure d'ammonium, les divers constituants étant sous la forme de particules ayant un diamètre moyen inférieur à 0,5 mm, en ce qu'on emballe le mélange obtenu dans des conditionnements étanches et en ce qu'on incorpore dans le mélange et sur le site d'exploitation la quantité d'eau nécessaire pour permettre la cristallisation totale du chlorure de calcium sous la forme hexahydratée.

**Patentansprüche**

1. Zusammensetzung auf der Basis von Calciumchloridhexahydrat zur Speicherung von Kalorien durch Phasenübergang, dadurch gekennzeichnet, daß sie bezogen auf das Gewicht des wasserfreien Calciumchlorids 2 bis 15 Gew.-% einer nitrierten Kaliumverbindung und 2 bis 15 Gew.-% Ammoniumchlorid enthält.

2. Zusammensetzung gemäß Anspruch 1, dadurch gekennzeichnet, daß die nitrierte Kaliumverbindung Kaliumnitrat ist.

3. Zusammensetzung gemäß Anspruch 1 oder 2, dadurch gekennzeichnet, daß das Gewichtsverhältnis zwischen den Mengen der nitrierten Kaliumverbindung und Ammoniumchlorid in der Zusammensetzung zwischen 0,4 und 2 liegt.

4. Zusammensetzung gemäß einem der Ansprüche 1 bis 3, dadurch gekennzeichnet, daß sie außerdem ein Keimbildungsmittel und/oder ein Verdickungsmittel enthält.

5. Verfahren zur Herstellung einer Zusammensetzung auf der Basis von Calciumchloridhexahydrat zur Speicherung von Kalorien durch Phasenübergang, dadurch gekennzeichnet, daß man in die Zusammensetzung bezogen auf das Gewicht des Wasserfreien Calciumchlorids 2 bis 15 Gew.-% einer nitrierten Kaliumverbindung und 2 bis 15 % Ammoniumchlorid einbringt.

6. Verfahren nach Anspruch 5, dadurch gekennzeichnet, daß man eine wäßrige Lösung von Calciumchlorid bildet, worin die Wassermenge der Menge entspricht, die notwendig ist für die Kristallisation des Calciumchlorids in Hexahydratform, daß man die Lösung bei mindestens 30°C hält, daß man in die Lösung die gewünschten Mengen von nitrierter Kaliumverbindung und Ammoniumchlorid einbringt und dabei das Ganze kontinuierlich umrührt und daß man die so erhaltene pastose Mischung in eine dichte Verpackung bringt.

7. Verfahren nach Anspruch 5, dadurch gekennzeichnet, daß man in einen Mischer wasserfreies, mono- und/oder dihydratisiertes Calciumchlorid einbringt sowie die gewünschten Mengen an nitrierter Kaliumverbindung und Ammoniumchlorid, wobei sich die verschiedenen Bestandteile in Form von Teilchen befinden mit einem mittleren Durchmesser unterhalb von 0,5 mm, daß man die so erhaltene Mischung in dichte Verpackungen verpackt und daß man in die Mischung und am Ort der Benutzung die notwendige Wassermenge einbringt, um die vollständige Kristallisation des Calciumchlorids in Form von Hexahydrat zu ermöglichen.

**Claims**

1. A composition based on calcium chloride hexahydrate for storing heat using a phase change, characterized in that it contains, relative to the weight of anhydrous calcium chloride, from 2 to 15 % by weight of a potassium nitrogen compound and from 2 to 15 % by weight of ammonium chloride.

2. A composition according to Claim 1, characterized in that the potassium nitrogen compound is potassium nitrate.

3. A composition according to Claim 1 or 2, characterized in that the weight relationship between the quantities of the potassium nitrogen compound and ammonium chloride which are incorporated in the composition is between 0.4 and 2.

4. A composition according to any one of Claims 1 to 3, characterized in that it additionally contains a nucleacting agent and/or a thickening agent.

5. A process for producing a composition based on calcium chloride hexahydrate for storing heat using a phase change, characterized in that there are incorporated in this composition, relative to the weight of anhydrous calcium chloride, from 2 to 15 % by weight of a potassium nitrogen compound and from 2 to 15 % of ammonium chloride.

6. A process according to Claim 5, characterized in that an aqueous calcium chloride solution is produced in which the quantity of water present corresponds to the quantity necessary for the crystallization of calcium chloride in the hexahydrated from, the solution is maintained at at least 30°C, and the required quantites of a potassium nitrogen compound and ammonium chloride are incorporated in it while the mixture is subjected to continous stirring and the pasty mixture thus produced is packed in impervious packages.

7. A process according to Claim 5, characterized in that anhydrous, mono- and/or dihydrated calcium chloride and the required quantities of a potassium nitrogen compound and of ammonium chloride are introduced into a mixer, the various components being in the form of particles with a mean diameter below 0.5 mm, the mixture obtained is packed in impervious packages and the quantity of water necessary to permit the total crystallization of the calcium chloride in the hexahydrated form is incorporated in the mixture and at the site of utilization.